# EUROPÄISCHE PATENTSCHRIFT

(11) **EP 2 092 212 B1**
(45) Veröffentlichungstag und Bekanntmachung des Hinweises auf die Patenterteilung: **18.08.2010**
(21) Anmeldenummer: 07856347.5
(22) Anmeldetag: 04.12.2007
(51) Int. Cl.: F16F 15/02, F16F 15/16

(54) **TORSIONSSCHWINGUNGSDÄMPFERANORDNUNG**
TORSIONAL VIBRATION DAMPER ARRANGEMENT
ENSEMBLE AMORTISSEUR DE VIBRATIONS DE TORSION

(30) Priorität: 22.12.2006 DE 102006061342
(43) Veröffentlichungstag der Anmeldung: 26.08.2009
(73) Patentinhaber: ZF Friedrichshafen AG, 88038 Friedrichshafen (DE)
(72) Erfinder: CARLSON, Cora, 97456 Dittelbrunn (DE); ORLAMÜNDER, Andreas, 97453 Schonungen (DE); DÖGEL, Thomas, 97688 Bad Kissingen (DE)
(86) Internationale Anmeldenummer: PCT/EP2007/010505
(87) Internationale Veröffentlichungsnummer: WO 2008/080485

(56) Entgegenhaltungen:
- EP-A- 1 715 216
- EP-A- 1 734 279
- WO-A-2007/065569
- DE-A1- 2 825 957
- DE-A1- 10 057 822
- DE-A1- 19 626 729
- DE-C1- 10 059 226
- DE-C1- 10 064 332

## Beschreibung

### Technisches Gebiet

Die vorliegende Erfindung betrifft eine Torsionsschwingungsdämpferanordnung, insbesondere für den Antriebsstrang eines Fahrzeugs, umfassend eine Primärseite und eine über eine Dämpferfluidanordnung mit der Primärseite zur Drehung um eine Drehachse und zur Relativdrehung bezüglich einander gekoppelte Sekundärseite.

### Stand der Technik

Aus der nachveröffentlichten deutschen Patentanmeldung DE 10 2005 058 531 ist eine Torsionsschwingungsdämpferanordnung bekannt, bei welcher die zur Schwingungsdämpfung erforderliche Elastizität durch eine Dämpferfluidanordnung bereitgestellt wird, die ein im Wesentlichen unkompressibles erstes Dämpferfluid, also eine Flüssigkeit, und ein kompressibles zweites Dämpferfluid, also ein gasförmiges Medium, umfasst. Das erste, unkompressible Dämpferfluid ist in Druckkammern angeordnet, die bei Relativdrehung zwischen der Primärseite und der-Sekundärseite ihr Volumen ändern. Bei Volumenverringerung wird aus diesen Druckkammern erstes Dämpferfluid in radial außerhalb davon angeordnete Verbindungskammern verdrängt. Jede Verbindungskammer ist durch einen in Umfangsrichtung verschiebbaren Trennkolben getrennt von einer radial außerhalb einer jeweiligen Druckkammer liegenden und im Wesentlichen in Umfangsrichtung sich erstreckenden Ausgleichskammer, in welcher zweites Dämpferfluid angeordnet ist. Bei Verdrängung des ersten Dämpferfluids aus der Druckkammer wird der Trennkolben durch den in der Verbindungskammer erhöhten Volumenanteil des ersten Druckfluids verschoben, und zwar unter Kompression des zweiten Dämpferfluids. Aus der vorveröffentlischten deutschen Patentanmeldung DE 196 26 729 A1 ist eine dem Oberbegriff des Anspruchs 1 entsprechende Torsionsschwingungsdämpferanordnung bekannt.

### Darstellung der Erfindung

Es ist die Aufgabe der vorliegenden Erfindung, eine Torsionsschwingungsdämpferanordnung bereitzustellen, welche bei effizienter Bauraumausnutzung ein verbessertes Schwingungsdämpfungsverhalten aufweist.

Erfindungsgemäß wird diese Aufgabe gelöst durch eine Torsionsschwingungsdämpferanordnung, insbesondere für den Antriebsstrang eines Fahrzeugs, umfassend eine Primärseite und eine über eine Dämpferfluidanordnung mit der Primärseite zur Drehung um eine Drehachse und zur Relativdrehung bezüglich einander gekoppelte Sekundärseite, dadurch gekennzeichnet, dass die Dämpferfluidanordnung ein ein Drehmoment zwischen der Primärseite und der Sekundärseite übertragendes erstes Dämpferfluid mit geringerer Kompressibilität in einer ersten Dämpferfluidkammeranordnung umfasst sowie ein bei Druckerhöhung des ersten Dämpferfluids in der ersten Dämpferfluidkammeranordnung belastetes zweites Dämpferfluid mit höherer Kompressibilität in einer zweiten Dämpferfluidkammeranordnung umfasst, wobei die zweite Dämpferfluidkammeranordnung eine Mehrzahl vorzugsweise im Wesentlichen zylindrischer Kammereinheiten umfasst, die bezüglich der ersten Dämpferfluidkammeranordnung radial außen oder/und radial innen und in Umfangsrichtung aufeinander folgend angeordnet sind, wobei in Zuordnung zu jeder Kammereinheit ein das erste Dämpferfluid von dem zweiten Dämpferfluid trennendes und bei Druckveränderung in der Kammereinheit im Wesentlichen radikal verlagerbares Trennelement vorgesehen ist.

Bei der erfindungsgemäßen Torsionsschwingungsdämpferanordnung sind die Kammereinheiten der zweiten Dämpferfluidkammeranordnung, also diejenigen Volumina, welche im Wesentlichen auch das zur Erfüllung der Schwingungsdämpfungsfunktionalität komprimierbare zweite Dämpferfluid enthalten, im Wesentlichen radial sich erstreckend angeordnet, wobei diese Anordnungsrichtung auch der Bewegungsrichtung der den verschiedenen Kammereinheiten zugeordneten radial verlagerbaren Trennelementen entspricht. Dies bedeutet, dass erstens die Bewegung dieser Trennelemente eine im Wesentlichen lineare Bewegung sein kann und nicht entlang einer in Umfangsrichtung gekrümmten Bahn verlaufen muss. Dies ist vor allem dann von Vorteil, wenn derartige Trennelemente als sich entsprechend den Druckverhältnissen verschiebende Trennkolben ausgebildet sind. Zum anderen ermöglicht die erfindungsgemäße Positionierung bzw. Ausrichtung der Kammereinheiten eine sehr effiziente Ausnutzung des zur Verfügung stehenden Bauraums insbesondere in radialer Richtung, was die Bereitstellung eines vergleichsweise großen Speichervolumens für das zweite Dämpferfluid ermöglicht.

Beispielsweise kann vorgesehen sein, dass die erste Dämpferfluidkammeranordnung mit ringartiger Struktur ausgebildet ist und die Kammereinheiten der zweiten Dämpferfluidkammeranordnung bezüglich der ersten Dämpferfluidkammeranordnung um die Drehachse in sternartiger Konfiguration angeordnet sind. Es sei hier darauf hingewiesen, dass, sofern von einer sternartigen Konfiguration bzw. von einer Abfolge in Umfangsrichtung die Rede ist, dies selbstverständlich auch mit einschließt, dass in Umfangsrichtung aufeinander folgende Kammereinheiten in axialer Richtung zueinander versetzt sein können und sich in Umfangsrichtung teilweise überlappen können.

Vor allem dann, wenn im radial äußeren Bereich vergleichsweise viel Bauraum zur Verfügung steht, ist es vorteilhaft, wenn die Kammereinheiten der zweiten Dämpferfluidkammeranordnung bezüglich der ersten Dämpferfluidkammeranordnung radial außen angeordnet sind.

Bei einer alternativen, insbesondere in radialer Richtung sehr platzsparenden Ausgestaltungsform wird vorgeschlagen; dass die Kammereinheiten der zweiten Dämpferfluidkammeranordnung bezüglich der ersten Dämpferfluidkammeranordnung radial innen angeordnet sind.

Der Aufbau der erfindungsgemäßen Torsionsschwingungsdämpferanordnung kann weiter derart sein, dass die erste Dämpferfluidkammeranordnung wenigstens eine bei Relativdrehung der Primärseite bezüglich der Sekundärseite in einer ersten Relativdrehrichtung in ihrem Volumen verminderbare erste Druckkammer aufweist, welche über eine Verbindungskammer in Wirkverbindung mit wenigstens einer dieser zugeordneten Kammereinheit der zweiten Dämpferfluidkammeranordnung steht.

Um sowohl in Zugrichtung, also beispielsweise bei Drehmomentübertragung von der Primärseite zur Sekundärseite, als auch in Schubrichtung, also beispielsweise bei Drehmomentübertragung von Sekundärseite zur Primärseite, eine Dämpfungsfunktionalität bereitstellen zu können, wird weiter vorgeschlagen, dass die erste Dämpferfluidkammeranordnung wenigstens eine bei Relativdrehung der Primärseite bezüglich der Sekundärseite in einer der ersten Relativdrehrichtung entgegengesetzten zweiten Relativdrehrichtung in ihrem Volumen verminderbare zweite Druckkammer aufweist, welche über eine Verbindungskammer in Wirkverbindung mit wenigstens einer dieser zugeordneten Kammereinheit der zweiten Dämpferfluidkammeranordnung steht.

Dabei kann eine sehr effiziente Radialstaffelung dadurch erhalten werden, dass die wenigstens eine erste Druckkammer oder/und die wenigstens eine zweite Druckkammer sich in Umfangsrichtung erstreckt und dass die dieser zugeordnete Verbindungskammer an derjenigen radialen Seite angeordnet ist, an welcher die zweite Dämpferfluidkammeranordnung bezüglich der ersten Dämpferfluidkammeranordnung angeordnet ist. Dies bedeutet im Wesentlichen, dass die Verbindungskammern immer radial zwischen den Druckkammern der ersten Dämpferfluidkammeranordnung und den Kammereinheiten der zweiten Dämpferfluidkammeranordnung liegen.

Um die vorangehend angesprochene ringartige Struktur der Druckkammern bzw. der ersten Dämpferfluidkammeranordnung zu erlangen, wird vorgeschlagen, dass eine Seite von Primärseite und Sekundärseite ein erstes im Wesentlichen zylindrisches Kammergehäuse umfasst und dass die andere Seite von Primärseite und Sekundärseite ein in das erste zylindrische Kammergehäuse eingesetztes und mit diesem einen Ringraum begrenzendes zweites zylindrisches Kammergehäuse umfasst, wobei an dem ersten Kammergehäuse wenigstens ein auf das zweite Kammergehäuse sich zu erstreckender erster Umfangsbegrenzungsvorsprung vorgesehen ist und an dem zweiten Kammergehäuse wenigstens ein sich auf das erste Kammergehäuse zu erstreckender zweiter Umfangsbegrenzungsvorsprung vorgesehen ist und wobei zwischen jeweils einem ersten Umfangsbegrenzungsvorsprung und einem zweiten Umfangsbegrenzungsvorsprung eine Druckkammer in Umfangsrichtung begrenzt ist und das Volumen der Druckkammer durch Relativumfangsbewegung der diese begrenzenden Umfangsbegrenzungsvorsprünge veränderbar ist.

Vor allem dann, wenn eine Dämpfungsfunktionalität sowohl in Zug- als auch in Schubrichtung bereitgestellt werden soll, kann das effektive Volumen der zweiten Dämpferfluidkammeranordnung, also des zweiten Dämpferfluids, dadurch vergrößert werden, dass wenigstens eine einer ersten Druckkammer der ersten Dämpferfluidkammeranordnung zugeordnete Kammereinheit der zweiten Dämpferfluidkammeranordnung in Druckausgleichsverbindung mit wenigstens einer weiteren Kammereinheit der zweiten Dämpferfluidkammeranordnung steht, welche einer zweiten Druckkammer der ersten Dämpferfluidkammeranordnung zugeordnet ist. Zumindest einige der Kammereinheiten sind dann doppelt wirkend, nämlich sowohl in Zugrichtung, als auch in Schubrichtung.

Erfindungsgemäß kann weiter vorgesehen sein, dass die Anzahl der einer ersten Druckkammer der ersten Dämpferfluidkammer zugeordneten Kammereinheiten der zweiten Dämpferfluidkammeranordnung sich von der Anzahl der einer zweiten Druckkammer der ersten Dämpferfluidkammeranordnung zugeordneten Kammereinheiten der zweiten Dämpferfluidkammeranordnung unterscheidet. Auf diese Art und Weise wird es möglich, das Schwingungsdämpfungsverhalten in Zugrichtung und in Schubrichtung unterschiedlich zu gestalten.

Weiter ist es möglich, dass die Anzahl der einer ersten Druckkammer der ersten Dämpferfluidkammeranordnung zugeordneten Kammereinheiten der zweiten Dämpferfluidkammeranordnung sich von der Anzahl der einer weiteren ersten Druckkammer der ersten Fluidkammeranordnung zugeordneten Kammereinheiten der zweiten Dämpferfluidkammeranordnung unterscheidet oder/und dass die Anzahl der einer zweiten Druckkammer der ersten Dämpferfluidkammeranordnung zugeordneten Kammereinheiten der zweiten Dämpferfluidkammeranordnung sich von der Anzahl der einer weiteren zweiten Druckkammer der ersten Dämpferfluidkammeranordnung zugeordneten Kammereinheiten der zweiten Dämpferfluidkammeranordnung unterscheidet.

Zur Bereitstellung einer gewünschten Dämpfungscharakteristik kann es vorteilhaft sein, ein vergleichsweise großes Volumen für das zweite Dämpferfluid bereitzuhalten. Es wird daher vorgeschlagen, dass wenigstens einer Kammereinheit der zweiten Dämpferfluidkammeranordnung eine Volumenerweiterung für das zweite Dämpferfluid zugeordnet ist. Dies kann beispielsweise dadurch erlangt werden, dass die Volumenerweiterung das zwischen zwei in Umfangsrichtung aufeinander folgenden Kammereinheiten der zweiten Dämpferfluidkammeranordnung eingeschlossene Volumen umfasst. Auf diese Art und Weise ist es nicht erforderlich, zusätzlichen radialen Bauraum für derartige Volumenerweiterungen bereitstellen zu müssen.

Um das Dämpfungsverhalten weiter beeinflussen zu können, wird vorgeschlagen, dass die erste Dämpferfluidkammeranordnung über eine Drehdurchführung in Verbindung mit einer Quelle oder/und einem Reservoir für das erste Dämpferfluid steht oder bringbar ist.

### Kurze Beschreibung der Zeichnungen

Die vorliegende Erfindung wird nachfolgend mit Bezug auf die beiliegenden Zeichnungen detailliert beschrieben. Es zeigt:
- Fig. 1: eine Längsschnittansicht einer erfindungsgemäß aufgebauten Tor- sionsschwingungsdämpferanordnung;
- Fig. 2: eine Querschnittansicht der Anordnung der Fig. 1, geschnitten längs einer Linie II - II in Fig. 1;
- Fig. 3: eine der Fig. 2 entsprechende Teil-Schnittansicht einer abgewandelten Ausgestaltungsform;
- Fig.4: eine weitere der Fig. 2 entsprechende Teil-Schnittansicht einer abgewandelten Ausgestaltungsform;
- Fig. 5: eine Längsschnittansicht einer alternativen Ausgestaltungsform der Torsionsschwingungsdämpferanordnung;
- Fig.6: eine den radial inneren Bereich der Torsionsschwingungsdämpfer- anordnung der Fig. 1 darstellende Querschnittansicht;
- Fig. 7: eine weitere der Fig. 2 entsprechende Querschnittansicht einer alternativen Ausgestaltungsform;
- Fig. 8: die Ausgestaltungsform der Fig. 7 im Längsschnitt;
- Fig. 9: eine Teil-Schnittdarstellung zweier Kammereinheiten;
- Fig. 10: die beiden Kammereinheiten der Fig. 9 in einem anderen Betriebszustand;
- Fig. 11: eine der Fig. 9 entsprechende Ansicht einer alternativen Ausge- staltungsform;
- Fig. 12: die beiden Kammereinheiten der Fig. 11 in einem anderen Betriebs- zustand;
- Fig. 13: eine weitere der Fig. 9 entsprechende Ansicht einer alternativen Ausgestaltungsform;
- Fig. 14: eine weitere der Fig. 9 entsprechende Darstellung einer alternativen Ausgestaltungsform.

### Weg(e) zur Ausführung der Erfindung

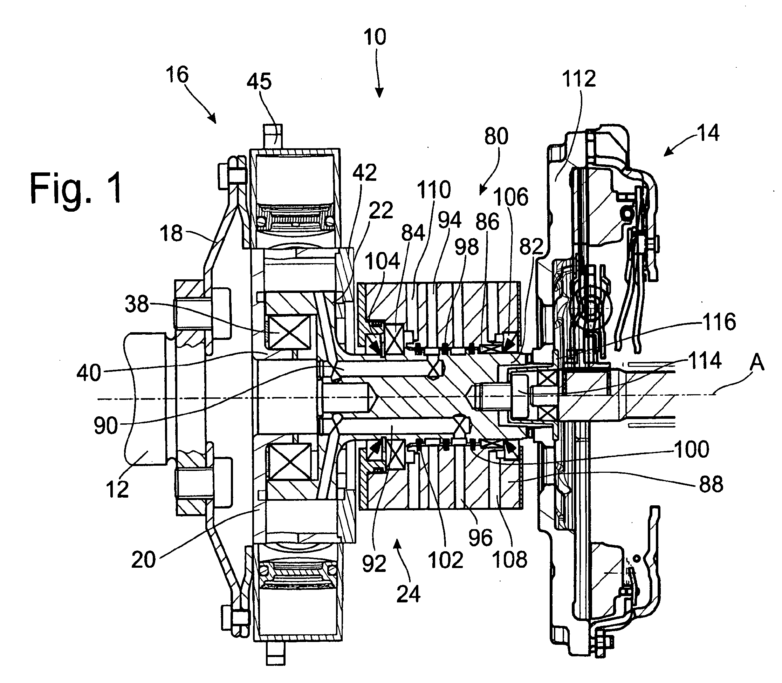

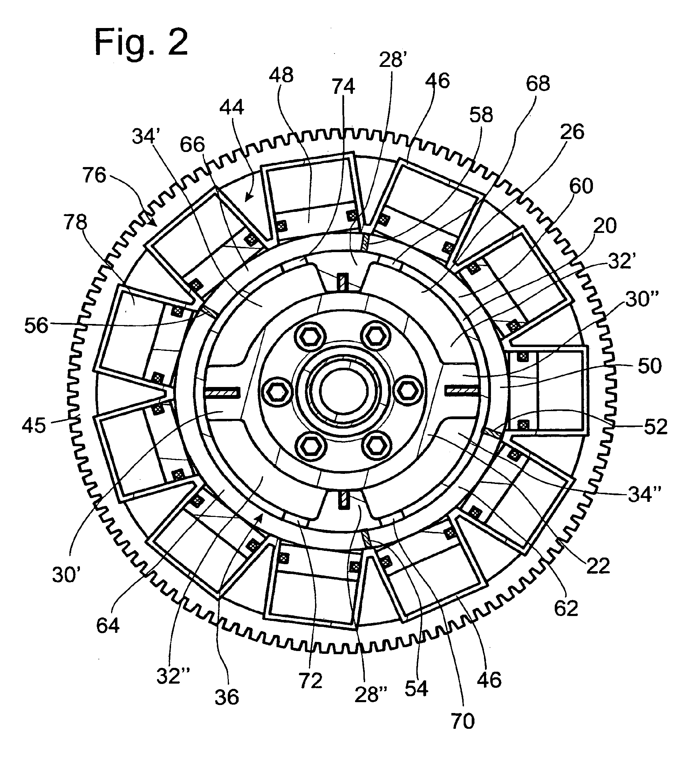

Die Fig. 1 und 2 zeigen eine erste Ausgestaltungsform einer erfindungsgemäßen Torsionsschwingungsdämpferanordnung 10. Diese dient dazu, in dem Antriebsstrang eines Fahrzeugs ein Drehmoment zwischen einer um eine Drehachse A rotierenden Antriebswelle 12, also beispielsweise einer Kurbelwelle, und einer Reibungskupplung 14 zu übertragen. Mit Bezug auf nachfolgende Erläuterungen sei hier darauf hingewiesen, dass im Sinne der vorliegenden Erfindung von einem Zugzustand die Rede ist, wenn ein Drehmoment von der Antriebswelle 12 auf die Reibungskupplung 14 zu übertragen ist, während von einem Schubzustand dann die Rede ist, wenn das Drehmoment von der Reibungskupplung 14 in Richtung zur Antriebswelle 12 übertragen wird, also beispielsweise ein Fahrzeug in einem Motorbremszustand ist.

Die Torsionsschwingungsdämpferanordnung 10 umfasst eine allgemein mit 16 bezeichnete Primärseite. Diese ist über eine Flexplattenanordnung 18 mit der Antriebswelle 12 verbunden. Dies ist besonders daher von Vorteil, da dadurch eine Elastizität in den Antriebsstrang integriert ist, die Taumelbewegungen bzw. Achsversätze kompensieren kann. Außerdem kann, wie dies in Fig. 1 deutlich erkennbar ist, die Flexplattenanordnung 18 derart gestaltet sein, dass radial innen die Anbindung an die Antriebswelle 12 erfolgt und radial außen die Anbindung an die Primärseite 16 erfolgt" so dass im radial inneren Bereich der Torsionsschwingungsdämpferanordnung 10 keine Maßnahmen ergriffen werden müssen, um dort die Verbindung mit der Antriebswelle 12 zu ermöglichen.

Die Primärseite 16 umfasst ein im Wesentlichen ringartig ausgestaltetes erstes Kammergehäuse 20. In dieses ist in koaxialer Art und Weise ein ebenfalls ringartig ausgestaltetes zweites Kammergehäuse 22 einer Sekundärseite 24 der Torsionsschwingungsdämpferanordnung 10 eingesetzt. Wie in Fig. 2 deutlich sichtbar, ist zwischen den beiden Kammergehäusen 20, 22 ein ringartiger Zwischenraum 26 gebildet. Am ersten Kammergehäuse 20 sind in einem Winkelabstand von 180° zwei nach radial innen greifende Umfangsbegrenzungsvorsprünge 28' und 28" vorgesehen. Am zweiten Kammergehäuse 22 sind in entsprechender Weise ebenfalls in einem Winkelabstand von 180° zwei nach radial außen sich erstreckende Umfangsbegrenzungsvorsprünge 30' und 30" vorgesehen. Die auf das jeweils andere Kammergehäuse sich zu erstreckenden Umfangsbegrenzungsvorsprünge 28', 28", 30' und 30" begrenzen zwischen sich jeweilige erste Druckkammern 32' und 32" bzw. zweite Druckkammern 34' und 34" einer allgemein mit 36 bezeichneten ersten Dämpferfluidkammeranordnung. Durch an den jeweiligen Umfangsbegrenzungsvorsprüngen 28', 28", 30' und 30" vorgesehene Dichtungselemente sind die in Umfangsrichtung alternierend aufeinander folgenden Druckkammern 32', 34", 32", 34' im Wesentlichen fluiddicht voneinander getrennt. Die Druckkammern 32', 32", 34' und 34" sind ferner in axialer Richtung durch das erste Kammergehäuse 20 und eine mit diesem fest verbundene Abschlussplatte 42 in Verbindung mit dem zweiten Kammergehäuse 22 und daran jeweils vorgesehenen Dichtungselementen fluiddicht abgeschlossen. Durch die Relativdrehbarkeit der Primärseite 16 bezüglich der Sekundärseite 24 der Torsionsschwingungsdämpferanordnung 10 um die Drehachse A sind die Volumina der Druckkammern 32', 32", 34' und 34" veränderbar. Dreht sich beispielsweise in der Darstellung der Fig. 2 das innere Kammergehäuse 22 bezüglich des äußeren Kammergehäuses 20 im Gegenuhrzeigersinn, so nimmt das Volumen der zweiten Druckkammern 34' und 34" zu, während das Volumen der ersten Druckkammern 32' und 32" abnimmt.

Um diese Relativdrehbewegung in definierter Art und Weise zu ermöglichen, ist, wie in Fig. 2 erkennbar, ein Radiallager 38 vorgesehen, das zwischen dem Innenumfang des zweiten Kammergehäuses 22 und einem dieses radial innen übergreifenden Ansatz 40 des ersten Kammergehäuses 20 angeordnet ist. Dieses Lager 38 kann als Wälzkörperlager oder aber auch als Gleitlager ausgebildet sein. Weiter kann dieses Lager auch der Axialabstützung dienen.

Radial außen ist das erste Kammergehäuse 20 umgeben von einer Kammereinheitenbaugruppe 44. Diese beispielsweise in einem Teil gefertigte Kammereinheitenbaugruppe 44 umfasst eine Mehrzahl von in Umfangsrichtung um die Drehachse A aufeinander folgenden, topfartigen Kammereinheiten 46. Radial außen ist an der Kammereinheitenbaugruppe 44 als separates Bauteil ein mit den verschiedenen Kammereinheiten 46 in deren radialen äußerem Bereich beispielsweise durch Verschweißung fest verbundener Anlasserzahnkranz 45 vorgesehen. Die Kammereinheiten 46 sind also bezüglich der Drehachse A in nach radial außen sich erstreckender sternartiger Konfiguration angeordnet und sind nach radial innen offen. In jede dieser Kammereinheiten 46 ist ein Trennkolben 48 eingesetzt, der durch ein O-ringartiges Dichtungselement bezüglich der jeweiligen Kammereinheit 46 fluiddicht abgeschlossen ist und in dieser im Wesentlichen in radialer Richtung verlagerbar ist. Nach radial innen sind die Kammereinheiten 46 zu einem Ringraum 50 offen. Dieser ist in Umfangsrichtung unterteilt durch mehrere Trennwände 52, 54, 56, 58. Durch diese Trennwände 52, 54, 56, 58 wird der Ringraum 50 unterteilt in vier Verbindungskammern 60, 62, 64, 66. Jede dieser Verbindungskammern 60, 62, 64, 66 ist einer der Druckkammern 32, 34", 32" bzw. 34' zugeordnet. Man erkennt, dass im Kammergehäuse 20 radial außen jeweils Öffnungen 68, 70, 72, 74 vorhanden sind. Dabei stellt die Öffnung 68 eine Verbindung zwischen der ersten Druckkammer 32' und der radial außerhalb davon angeordneten Verbindungskammer 60 her. Die Öffnung 70 stellt eine Verbindung zwischen der zweiten Druckkammer 34" und der radial außerhalb davon angeordneten Verbindungskammer 62 her. Die Öffnung 72 stellt eine Verbindung zwischen der ersten Druckkammer 32" und der radial außerhalb davon angeordneten Verbindungskammer 64 her, und die Öffnung 74 stellt eine Verbindung zwischen der zweiten Druckkammer 34' und der radial außerhalb davon angeordneten Verbindungskammer 66 her.

Über diese Verbindungskammer 60, 62, 64, 66 sind die verschiedenen Druckkammern 32', 32" bzw. 34', 34" in Verbindung mit diesen jeweils zugeordneten der Kammereinheiten 46 einer allgemein mit 76 bezeichneten zweiten Dämpferfluidkammeranordnung. Man erkennt, dass durch die Positionierung der Trennwände 58 und 52 der ersten Druckkammer 32' über die Verbindungskammer 60 drei in Umfangsrichtung unmittelbar aufeinander folgende Kammereinheiten 46 zugeordnet sind. Der ersten Druckkammer 32" sind über die Verbindungskammer 64 vier der Kammereinheiten 46 zugeordnet. Der zweiten Druckkammer 34' sind über die Verbindungskammer 66 zwei Kammereinheiten 46 zugeordnet, und der zweiten Druckkammer 34" sind über die Verbindungskammer 62 ebenfalls zwei der Kammereinheiten 46 zugeordnet.

Die nach radial innen in Richtung zu dem Ringraum 50 bzw. den Verbindungskammern 60, 62, 64, 66 durch die Trennkolben 48 fluiddicht abgeschlossenen Volumina 78 der Kammereinheiten 46 sind mit einem kompressiblen Dämpferfluid, also beispielsweise einem Gas, wie z.B. Luft, gefüllt. Die Druckkammern 32', 32", 34' und 34" sind, ebenso wie die Verbindungskammern 60, 62, 64, 66 mit einem im Wesentlichen inkompressiblen Dämpferfluid, also einer Flüssigkeit, wie z.B. Öl oder dergleichen, gefüllt.

Um die Druckkammern 32', 32", 34' und 34" bzw. die Verbindungskammern 60, 62, 64, 66 mit dem inkompressiblen Dämpferfluid zu füllen, ist der Sekundärseite 24 eine allgemein mit 80 bezeichnete Drehdurchführung zugeordnet. Diese umfasst ein einen axialen Fortsatz 82 des Kammergehäuses 22 umgebenden und durch zwei Lagereinheiten 84, 86 bezüglich diesem drehbar gehaltenen Drehdurchführungsring 88. Im Kammergehäuse 22 sind durch Bohrungen Kanäle 90 bzw. 92 gebildet, von welchen beispielsweise der Kanal 90 zu den zweiten Druckkammern 34' bzw. 34" führt, während der Kanal 92 zu den ersten Druckkammern 32', 32" führt. Um hier Strömungsverluste so gering als möglich zu halten, ist es selbstverständlich möglich, zu jeder der Druckkammern einen eigenen Kanal zu führen. In Zuordnung zu jedem dieser Kanäle ist in dem Drehdurchführungsring 80 dann ein im Rotationsbetrieb stationärer Kanal 94 bzw. 96 vorgesehen, über welche Kanäle 94, 96 die Kanäle 90, 92 in Verbindung mit einer Quelle für das inkompressible Dämpferfluid oder ein Reservoir dafür bringbar sind. Auf diese Art und Weise kann der Fluiddruck des inkompressiblen Dämpferfluids in den Druckkammern 32', 32", 34' und 34" entsprechend den erforderlichen Dämpfungscharakteristiken angepasst werden.

Man erkennt in Fig. 1 weiter, dass zwischen bzw. an beiden Seiten der Kanäle 94, 96 im Drehdurchführungsring 88 Dichtungselemente 98, 100 bzw. 102 vorhanden sind, welche im Wesentlichen Druckdichtungen darstellen. Axial jeweils außerhalb der Lager 84 und 86 sind weiterhin Volumenstromdichtungen 104, 106 angeordnet. Zwischen den Dichtungen 100 und 106 einerseits und 102, 104 andererseits gebildete Volumina können über jeweilige Leckagekanäle 108, 110 entleert werden, so dass möglicherweise durch die Druckdichtungen noch hindurch gelangtes inkompressibles Dämpferfluid ebenfalls in das Reservoir zurückgeleitet werden kann.

Zur Reibungskupplung 14 sei noch ausgeführt, dass diese von herkömmlichem Aufbau ist und im Bereich eines Schwungrads 112 radial innen mit einer Hirthverzahnung ausgebildet ist, die in Kämmeingriff mit einer Hirthverzahnung am axialen Fortsatz 82 des Kammergehäuses 22 steht. Durch eine Spannschraube 114 kann dieser Kämmeingriff stabil beibehalten werden, so dass eine drehfeste Verbindung der Reibungskupplung 14 mit der Sekundärseite 24 der Torsionsschwingungsdämpferanordnung 10 realisiert ist. Diese Spannschraube 114 belastet über eine Spannhülse 116 den radial inneren Bereich des Schwungrads 12. In dieser Spannhülse 116 kann über ein Pilotlager oder dergleichen dann eine Getriebeeingangswelle oder dergleichen radial gelagert sein.

Es sei hier darauf hingewiesen, dass dies nur ein Beispiel für einen Antriebsstrang ist. Selbstverständlich könnte auch eine Rotoranordnung einer Elektromaschine im Falle eines Hybridantriebs auf diese Art und Weise mit der Sekundärseite 24 der Torsionsschwingungsdämpferanordnung 10 gekoppelt werden. Auch andere zur Drehmomentübertragung dienende Baugruppen, wie z.B. ein hydrodynamischer Drehmomentwandler, eine Fluidkupplung oder dergleichen könnten auf diese Art und Weise an die Sekundärseite 24 der Torsionsschwingungsdämpferanordnung 10 angekoppelt werden.

Im Folgenden wird die Funktion der vorangehend mit Bezug auf die Fig. 1 und 2 hinsichtlich ihres konstruktiven Aufbaus beschriebenen Torsionsschwingungsdämpferanordnung 10 erläutert.

Im Zugzustand, also einem Zustand, in welchem ein Drehmoment von der Primärseite 12 auf die Sekundärseite 24 übertragen wird, wird also bei zunächst festgehaltener Sekundärseite 24 und in der Fig. 2 auch festgehaltenem Kammergehäuse 22 die Primärseite 12, in der Fig. 2 also das Kammergehäuse 20, im Gegenuhrzeigersinn verdreht. Dies bedeutet, dass das in den zweiten Druckkammern 34' und 34" enthaltene im Wesentlichen nicht kompressible Dämpferfluid aus diesen Druckkammern durch die Öffnungen 74 bzw. 70 hindurch in die zugeordneten Verbindungskammern 66, 62 verdrängt wird. Durch den in den Verbindungskammern 66, 62 ansteigenden Druck werden die Trennkolben 48 der diesen Verbindungskammern 60, 62 zugeordneten Kammereinheiten 46 der zweiten Dämpferfluidkammeranordnung 76 belastet, so dass sie unter Kompression und entsprechender Druckerhöhung des in den Volumina 78 vorhandenen kompressiblen Dämpferfluids nach radial außen bewegt werden. Mit zunehmender Kompression steigt auch die Gegenkraft, so dass hier tatsächlich eine Federcharakteristik erzielt wird. Tritt die Belastung in der anderen Richtung auf, werden die ersten Druckkammern 32' und 32" in ihrem Volumen verringert, so dass das darin enthaltene inkompressible Dämpferfluid durch die Öffnungen 68 bzw. 72 in die zugeordneten Verbindungskammern 60, 64 verdrängt wird und entsprechend die radial außerhalb dieser Verbindungskammern 60, 64 angeordneten Kammereinheiten 46 beaufschlagt werden. Die Trennkolben 48 dieser Kammereinheiten 46 werden sich unter Kompression des kompressiblen Dämpferfluids nach radial außen bewegen und nunmehr in der Schubrichtung für die gewünschte Dämpfungscharakteristik sorgen.

Aus der vorangehenden Beschreibung erkennt man, dass durch die Verdrängung des inkompressiblen Dämpferfluids in der ersten Dämpferfluidkammeranordnung 36 und die entsprechende Beaufschlagung der Trennkolben 48 in den Kammereinheiten 46 der zweiten Dämpferfluidkammeranordnung 76 sowohl in Schubrichtung, als auch in Zugrichtung eine Dämpfungsfunktionalität erhalten werden kann. Die Dämpfungscharakteristik wird sich in Zugrichtung und in Schubrichtung unterscheiden, da in Zugrichtung insgesamt vier Kammereinheiten 46 wirksam sind, während dies in Schubrichtung insgesamt sieben Kammereinheiten 46 sind. Man erkennt also, dass allein durch die Positionierung der Trennwände 52, 54, 56, 58 eine Auswahl dahingehend getroffen werden kann, wie viele der Kammereinheiten 46 der zweiten Dämpferfluidkammeranordnung 76 im Schubbetrieb bzw. im Zugbetrieb wirksam sind. Weiterhin kann ein Einfluss auf die Dämpfungscharakteristik dadurch genommen werden, dass den verschiedenen ersten und ggf. auch den verschiedenen zweiten Druckkammern 32', 32" bzw. 34', 34" ebenfalls verschiedene Anzahlen an Kammereinheiten 46 zugeordnet sind, wie dies bei den ersten Druckkammern 32', 32" erkennbar ist. Um dabei im Rotationsbetrieb das Auftreten von Unwuchten zu vermeiden, ist es vorteilhaft, eine möglichst gleichmäßige Verteilung um die Drehachse A zu erhalten. Auch kann selbstverständlich die Größe bzw. die Anzahl der Kammereinheiten 46 auf die gegebenen Anforderungen abgestimmt sein. Bei dem dargestellten Beispiel mit insgesamt 11 Kammereinheiten 46 ist auf Grund der auch vorhandenen Trennung der einzelnen Kammereinheiten 46 voneinander zwangsweise eine ungleichmäßige Wirkcharakteristik in Zugrichtung und in Schubrichtung vorgesehen. Bei gerader Anzahl der Kammereinheiten 46 können in Zug- und in Schubrichtung gleich viele davon wirksam sein und mithin eine gleichmäßige Wirkcharakteristik in beiden Belastungsrichtungen bereitgestellt werden.

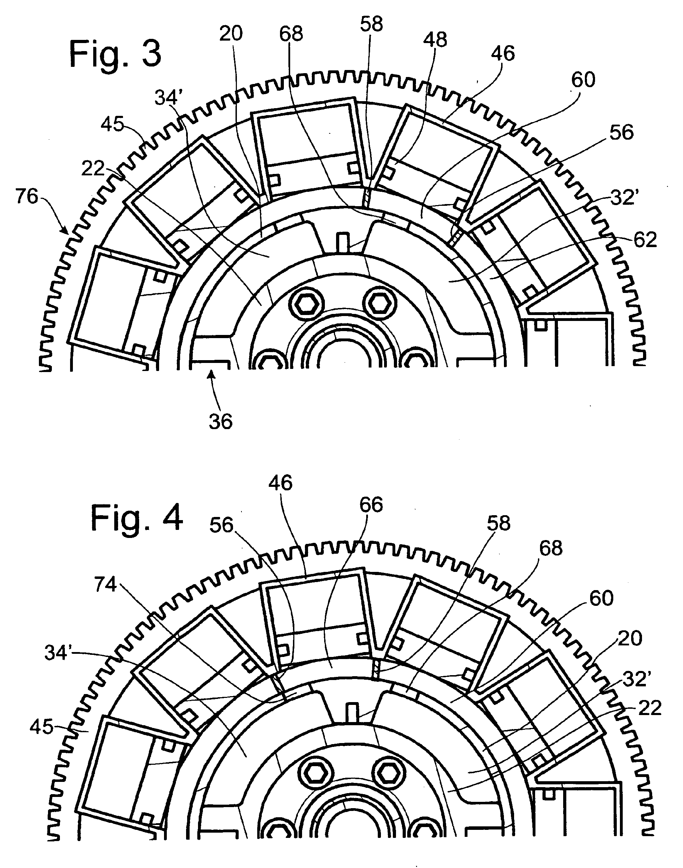

Die Fig. 3 und 4 zeigen die Variierbarkeit der Anzahl an Kammereinheiten 46, die in Schubrichtung bzw. in Zugrichtung wirken. So erkennt man in Fig. 3, dass der ersten Druckkammer 32' nur eine einzige Kammereinheit 46 zugeordnet ist, die nach radial innen zur Verbindungskammer 60 offen ist. Bei entsprechender Gestaltung der anderen ersten Druckkammer 32" wirken dann insgesamt in Schubrichtung zwei Kammereinheiten 46, während in Zugrichtung dann neun Kammereinheiten wirksam sind.

In Fig. 4 ist eine umgekehrte Anordnung gezeigt, bei welcher der zweiten Druckkammer 34' über die Verbindungskammer 66 eine einzige Kammereinheit 46 zugeordnet ist. Bei entsprechender Ausgestaltung der anderen zweiten Druckkammer 34" hat dies zur Folge, dass bei dieser Anordnung in Zugrichtung nur zwei Kammereinheiten 46 wirksam sind, während in Schubrichtung dann neun der insgesamt 11 Kammereinheiten 46 wirksam sind.

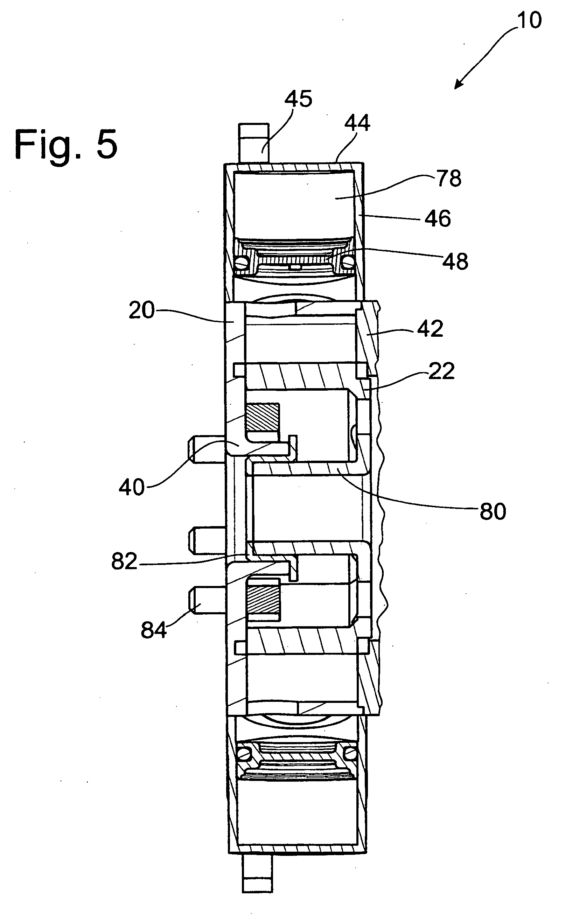

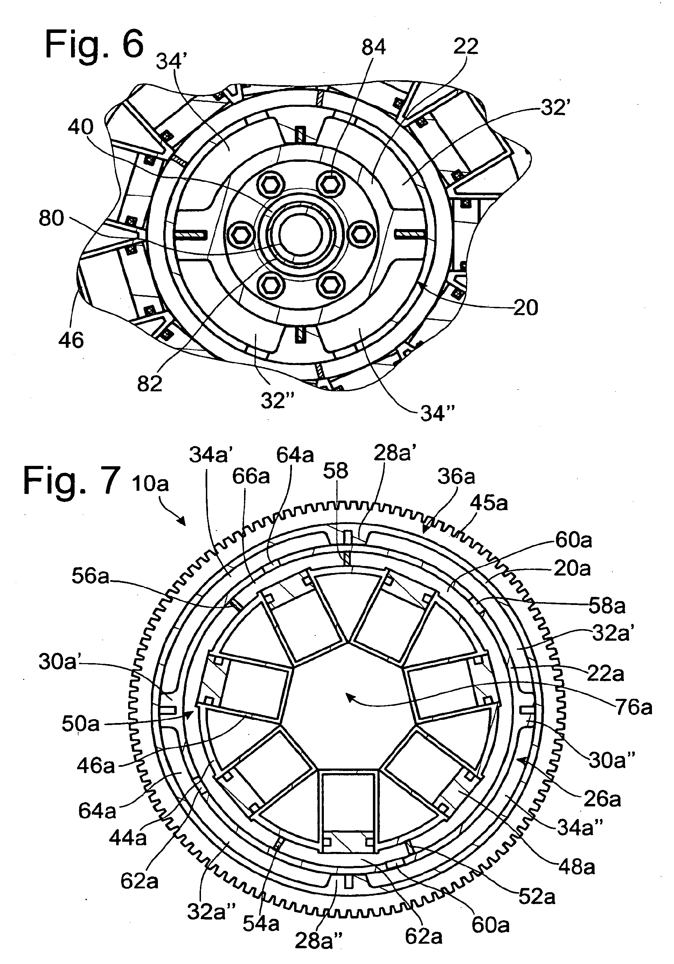

Eine hinsichtlich der gegenseitigen Lagerung der beiden Kammergehäuse 20, 22 andere Ausgestaltungsform ist in den Fig. 5 und 6 gezeigt. Man erkennt hier, dass beide Kammerbauteile 20, 22 radial innen sich axial überlappende ringartige Ansätze 40 bzw. 80 aufweisen. Zwischen diese ist ein hülsenartiges bzw. topfartiges Gleitlagerelement 82 eingesetzt. Auf Grund der sehr kompakten Ausgestaltung dieses Gleitlagerelements 82 ist hier im radial inneren Bereich ausreichend Bauraum vorhanden, um vermittels einer Mehrzahl von Schraubbolzen 84 die Torsionsschwingungsdämpferanordnung 10 an der Antriebswelle 12 festzulegen. Dies erfordert jedoch, dass vor allem durch das Kammerbauteil 22 hindurch die Möglichkeit eines Zugriffs auf die Schraubbolzen 84 bestehen muss, um diese mit einem Werkzeug erfassen zu können. Von Vorteil ist bei dieser Variante, dass insbesondere für das radial innen liegende Kammerbauteil 22 mehr radialer Bauraum zur Verfügung steht.

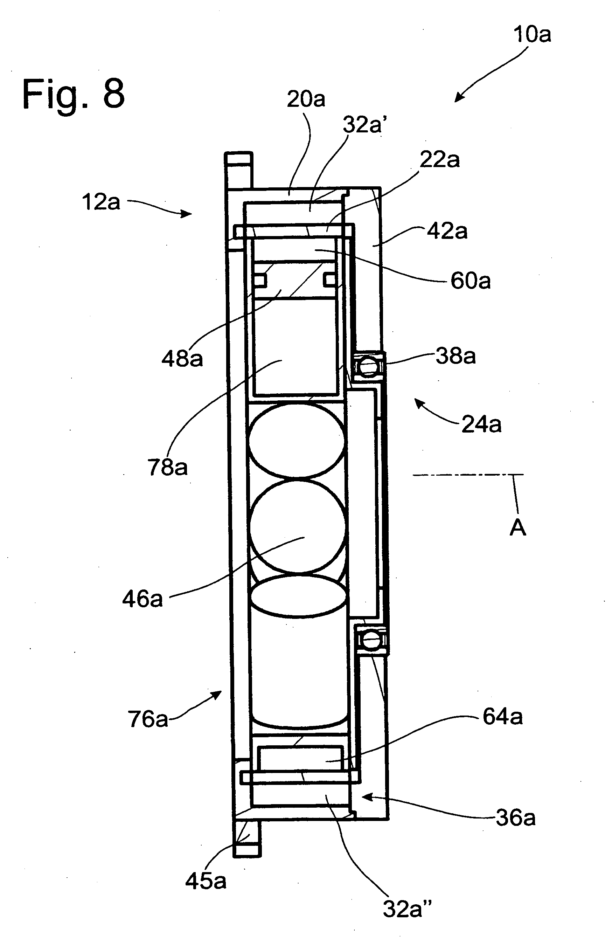

Eine abgewandelte Ausgestaltungsform ist in den Fig. 7 und 8 gezeigt. Hier sind Komponenten, welche vorangehend beschriebenen Komponenten hinsichtlich Aufbau und Funktion entsprechen, mit dem gleichen Bezugszeichen unter Hinzufügung eines Anhangs "a" bezeichnet.

Bei dieser Ausgestaltungsform sind die Kammereinheiten 46a der Kammereinheitenbaugruppe 44a radial innerhalb der ersten Dämpferfluidkammeranordnung 36a mit ihren Druckkammern 32a', 32a", 34a' und 34a" angeordnet. Die Verbindungskammern 60a, 62a, 64a, 66a liegen wieder radial zwischen den Druckkammern 32a', 32a", 34a', 34a" und der Kammereinheitenbaugruppe 44a der zweiten Dämpferfluidkammeranordnung 76a. Dies bedeutet, dass bei dieser Ausgestaltungsvariante im Wesentlichen das Kammergehäuse 20a mit dem daran vorgesehenen Zahnkranz 45a die Primärseite 12a bereitstellt, während nunmehr das Kammergehäuse 22a mit der Kammereinheitenbaugruppe 44a zu einer Einheit zusammengefasst ist und einen wesentlichen Bestandteil der Sekundärseite 24a der Torsionsschwingungsdämpferanordnung 10a bildet. Die einzelnen Kammereinheiten 46a sind wieder so angeordnet, dass sie sich im Wesentlichen radial erstrecken, d.h., die Trennkolben 48a so aufnehmen, dass auch diese sich bei druckbedingter Verlagerung im Wesentlichen radial bewegen. Diese nunmehr nach radial innen gerichtete sternartige Konfiguration hat zur Folge, dass in ihren radial inneren Endbereichen die Kammereinheiten 46a sehr nahe beieinander liegen, während sie in ihren radial äußeren Bereichen einen größeren gegenseitigen Umfangsabstand aufweisen. Die gegenseitige Lagerung zwischen Primärseite 12a und Sekundärseite 24a kann hier durch ein Wälzköperlager 38a realisiert sein, das radial innen zwischen der Platte 42a und dem Kammergehäuse 22a bzw. einem damit fest verbundenen Bauteil angeordnet ist.

Ein wesentlicher Vorteil dieser Ausgestaltungsform ist, dass vor allem der radial innen liegende Bauraum sehr effizient genutzt wird. Weiterhin ist es möglich, die einzelnen Volumina 78a der Kammereinheiten 46a sehr leicht durch entsprechende Verbindungsleitungen miteinander zu verbinden, um auf diese Art und Weise größere Gesamtvolumina zur Dämpfung bereitzustellen. Die Zufuhr des im Wesentlichen, nicht kompressiblen Dämpferfluids, das in den verschiedenen Druckkammern 32a', 32a", 34a', 34a" bzw. in den jeweils diesen zugeordneten Verbindungskammern 60a, 62a, 64a, 66a vorhanden ist, kann dabei über eine Drehdurchführung erfolgen, die nunmehr mit der Primärseite 12a zusammenwirkt, also beispielsweise einer axialen Verlängerung der Platte 42a, und zwar in einer Art und Weise, wie sie vorangehend mit Bezug auf die Fig. 1 beschrieben wurde.

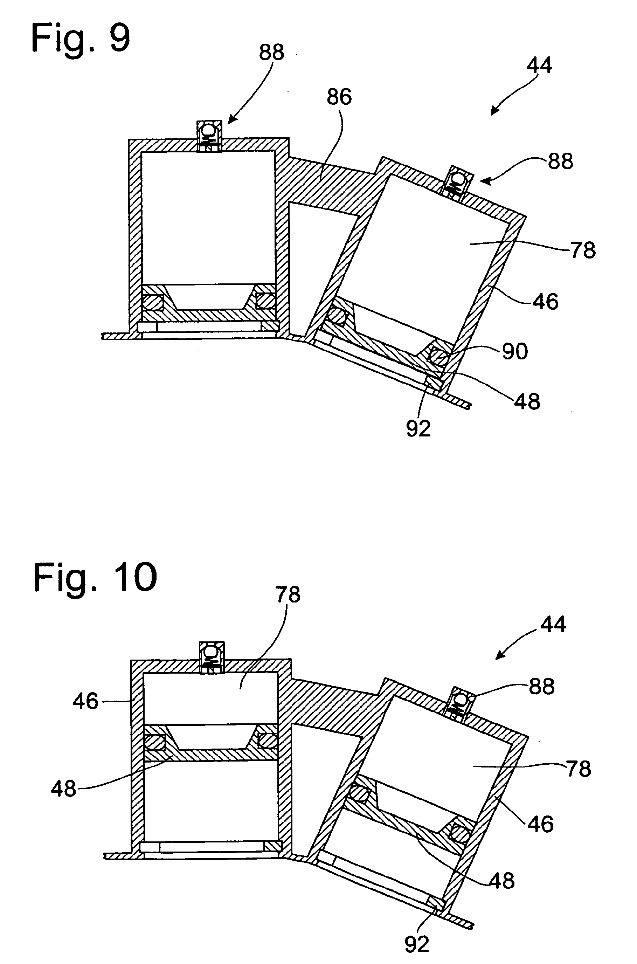

Die Fig. 9 zeigt in vergrößerter Ausgestaltung einen Teil der in der vorangehend beschriebenen Torsionsschwingungsdämpferanordnung 10 eingesetzten Kammereinheitenbaugruppe 44. Hier sind zwei nebeneinander liegende Kammereinheiten 46 gezeigt, die in ihrem radial inneren Bereich, also dort, wo sie in Richtung zu einer zugeordneten Verbindungskammer offen sind, sehr nahe beieinander liegen und, wie dies auch deutlich erkennbar ist, als ein integrales Bauteil vorgesehen sind. Zur Stabilisierung können die radial äußeren Bereiche der Kammereinheiten durch Verbindungsstege 86 miteinander verbunden sein. Ferner können in ihrem radial äußeren Bodenwandungsbereich die Kammereinheiten 46 mit Ventilen 88 ausgebildet sein, durch welche hindurch das kompressible Dämpferfluid, also beispielsweise Luft, mit dem gewünschten Druck eingeleitet werden kann. Diese Ventile 48 können federbelastete Kugelventile oder dergleichen sein.

Man erkennt im Schnitt weiter, dass die Trennkolben 48 so ausgebildet sind, dass sie einen vergleichsweiße dünnen Bodenbereich aufweisen und nur dort, wo im Umfangsbereich derselben ein O-ringartiges Dichtungselement 90 aufgenommen ist, eine größere Dicke aufweisen. Auf diese Art und Weise kann einerseits das zu bewegende Gewicht der Trennkolben 48 minimiert werden, andererseits kann das Volumen des kompressiblen Dämpferfluids vergrößert werden.

Man erkennt weiterhin, dass die Trennkolben 48 jeweils durch eine Sicherungsring 92 gegen Herausfallen aus den zylindrischen Kammereinheiten 46 gesichert sind, so dass auch in einem Fall, in welchem in einer zugeordneten Verbindungskammer kein oder nur sehr geringer Druck des inkompressiblen Dämpferfluids vorhanden ist, für eine definierte Endposition der Trennkolben 48 gesorgt sind.

In Fig. 10 ist ein Zustand gezeigt, bei welchem die ein- und derselben Verbindungskammer und somit auch derselben Druckkammer zugeordneten Kammereinheiten 46 mit unterschiedlichen Mengen des kompressiblen Dämpferfluids befüllt sind, so dass unterschiedliche Vorspannungsdrücke vorherrschen. Wird in der zugeordneten Verbindungskammer ein Druck aufgebaut, so hat dies zur Folge, dass die beiden Trennkolben 48 unterschiedlich weit verschoben werden. Ganz offensichtlich herrscht in dem Volumen 78 der in Fig. 10 links liegenden Kammereinheit 46 grundsätzlich ein geringerer Vorspanndruck des kompressiblen Dämpferfluids vor, so dass beim gleichen Druck in der zugeordneten Verbindungskammer dieser Trennkolben 48 stärker verschoben wird, als der Trennkolben 48 der anderen Kammereinheit 46. Auf diese Art und Weise kann ein gestuftes Wirksamwerden der verschiedenen Kammereinheiten 46 erhalten werden, was ein entsprechend gestuftes Dämpfungsverhalten beispielsweise in Zugrichtung, gewünschtenfalls aber auch in Schubrichtung zur Folge hat. Somit ist es beispielsweise möglich, auch für einen Leerlaufzustand eine insgesamt geringe Steifigkeit bereitzuhalten, während dann für größere zu übertragende Drehmomente bzw. stärkere Drehschwingungen auch die stärker mit dem kompressiblen Dämpferfluid vorgespannten Kammereinheiten 46 wirksam werden. Selbstverständlich ist es hier bei entsprechender Anzahl der Kammereinheiten 46 auch möglich, eine mehrfach gestufte Wirkcharakteristik bereitzustellen.

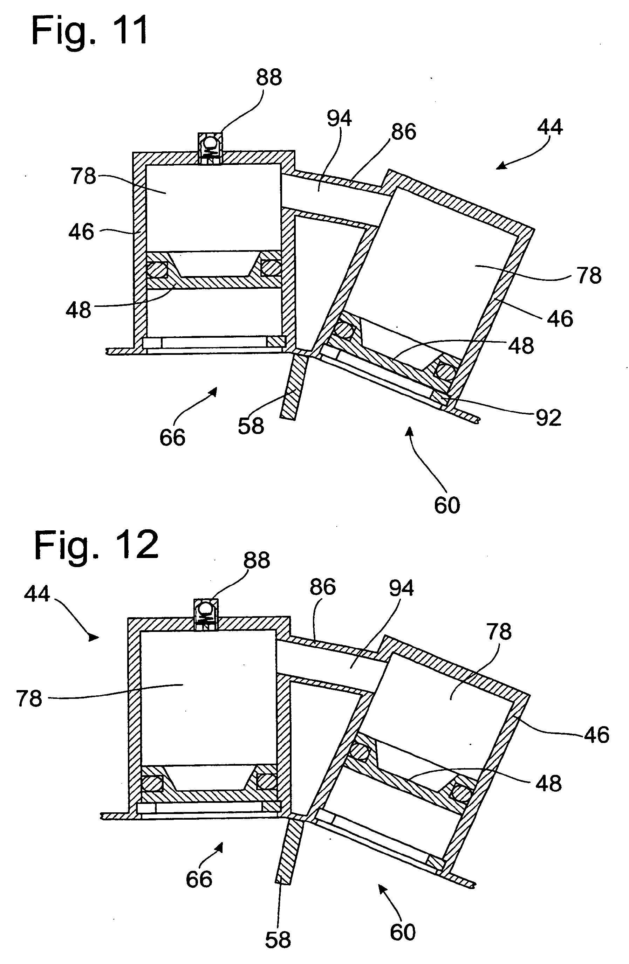

In Fig. 11 ist eine Anordnung gezeigt, bei welcher zwei verschiedenen Verbindungskammern 60, 66 und somit auch verschiedenen Druckkammern zugeordnete Kammereinheiten 46 durch einen Verbindungskanal 94 verbunden sind. Es ergibt sich somit durch das Verbinden der beiden Volumina 78 ein größeres Gesamtvolumen, das unabhängig von Drehmomenteinleitungsrichtung wirksam ist. Dabei ist in Fig. 11 der Zustand gezeigt, in welchem in der Verbindungskammer 60 und somit auch der zugeordneten Druckkammer 32' ein vergleichsweise niedriger Druck des inkompressiblen Dämpferfluids vorherrscht, während in der Verbindungskammer 66 und somit der zugeordneten zweiten Druckkammer 34' ein vergleichsweise hoher Druck vorherrscht. D.h., das System befindet sich im Zugzustand. Durch den höheren Druck in der Verbindungskammer 66 ist der Trennkolben 48 dieser in Fig. 11 links liegenden Kammereinheit 46 entgegen dem Druck des kompressiblen Dämpferfluids in den beiden Volumina 78, 80 und im Verbindungskanal 94 verschoben. D.h., sowohl im Zugzustand, als auch Schubzustand wirken die jeweils miteinander verbundenen und verschiedenen Druckkammern zugeordneten Kammereinheiten 46 mit ihrem jeweiligen Gesamtvolumen, was entsprechend zu einer geringeren Steifigkeit der Torsionsschwingungsdämpferanordnung 10 führt.

In Fig. 12 ist der Zustand dargestellt, in welchem sich die Richtung der Drehmomenteinleitung umgekehrt hat. Hier ist also der Druck in der Verbindungskammer 60 und somit der zugeordneten Druckkammer 32' größer, als der Druck in der Verbindungskammer 66 und der zugeordneten Druckkammer 34'. Dies führt dazu, dass der Trennkolben 48 der in der Fig. 12 rechts liegenden Kammereinheit 46 nunmehr in diese Kammereinheit 46 hinein verschoben ist.

Da bei dieser Ausgestaltungsform mehrere Kammereinheiten 46 bzw. deren Volumina 78 in Verbindung stehen, ist es ausreichend, bei einer dieser in Verbindung miteinander stehenden Kammereinheiten 46 das Ventil 88 vorzusehen, um das kompressible, gasförmige Dämpferfluid in diese Kammereinheiten 46 einzufüllen.

Es ist selbstverständlich, dass die Anzahl der hier miteinander zu einem jeweiligen Gesamtvolumen zusammengefassten Kammereinheiten 46 beliebig variiert werden kann. So können beispielsweise zwei Kammereinheiten 46 einer der ersten Druckkammer 32' oder/und 32" mit einer oder ggf. mehreren der Kammereinheiten 46 von einer oder mehreren der zweiten Druckkammern 34', 34" in Verbindung stehen.

Entsprechend ist es selbstverständlich möglich, Kammereinheiten 46 miteinander zu verbinden, die ein- und derselben Verbindungskammer bzw. ein und derselben Druckkammer zugeordnet sind.

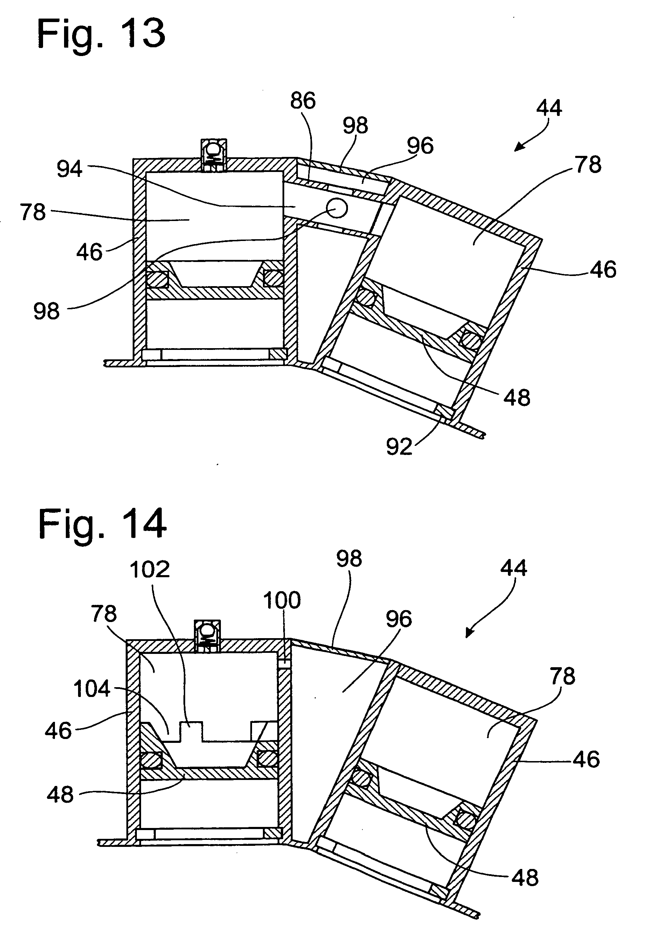

In Fig. 13 ist eine weitere Variante gezeigt, bei welcher das Gesamtvolumen für das kompressible Dämpferfluid vergrößert werden kann. Man erkennt hier, dass der zwischen zwei in Umfangsrichtung aufeinander folgenden und in sternartiger Konfiguration, also im Wesentlichen radial sich erstreckend angeordneten Kammereinheiten 46 eingeschlossene und sich nach radial innen verjüngende Volumenbereich 96 durch eine Abschlusswand 98 nach radial außen abgeschlossen ist und selbstverständlich durch entsprechende nicht dargestellte Abschlusswände auch in axialer Richtung abgeschlossen ist. Der Verbindungssteg 86 mit dem darin ausgebildeten Kanal 94 erstreckt sich also in diesem Volumenbereich 96. man erkennt im Verbindungskanal 94 mehrere zum Volumenbereich 96 offene Öffnungen 98, die somit die Volumina 78 der beiden gezeigten Kammereinheiten 46 und des Kanals 94 in Verbindung bringen mit dem Volumenbereich 96. Auch dies führt zu einer Vergrößerung des gesamt wirksam werdenden Volumens im Falle der Belastung der Trennkolben 48 durch das im Wesentlichen unkompressible Dämpferfluid.

Es ist selbstverständlich, dass diese Art der Verbindung bzw. der zusätzlichen Nutzung der Volumenbereiche 96 bei allen oder nur einem Teil der Kammereinheiten 46 erfolgen kann. Hier können, wie dies in den Fig. 11 und 12 gezeigt ist, die oder einige der so verbundenen Kammereinheiten 46 mit verschiedenen Verbindungskammern und somit verschiedenen Druckkammern zusammenwirken. Selbstverständlich kann diese Volumenvergrößerung auch bei den derselben Verbindungskammer, und somit im selben Belastungszustand wirksam werdenden Verbindungseinheiten 46 vorgesehen sein.

Wie bereits vorangehend mit Bezug auf die Fig. 7 und 8 dargelegt, ist selbstverständlich auch bei der Anordnung der Kammereinheiten 46 im radial inneren Bereich und mit nach radial innen sich erstreckender Ausrichtung eine derartige Nutzung der zwischen zwei Kammereinheiten liegenden Volumenbereiche sehr leicht möglich.

Eine weitere Variante hierzu ist in Fig. 14 gezeigt. Man erkennt wieder den Volumenbereich 96 zwischen zwei unmittelbar in Umfangsrichtung aufeinander folgenden Kammereinheiten 46. Der Volumenbereich 96 ist nach radial außen wieder durch die Wand 98 dicht abgeschlossen und ist entsprechend auch in axialer Richtung dicht abgeschlossen. Es ist hier kein Steg oder Kanal zwischen diesen beiden Kammereinheiten 46 vorhanden. Vielmehr ist in der Umfangswandung der links gezeigten Kammereinheit 46 eine Öffnung 100 vorgesehen, welche das Volumen 78 derselben in Verbindung mit dem Volumenbereich 96 bringt. Hier ist also nur das Volumen der links liegenden Kammereinheit 46 durch den Volumenbereich 96 vergrößert. Eine entsprechende Verbindung bzw. Wirkung wird bei der rechts liegenden Kammereinheit 46 nicht erzeugt.

Um auch bei maximaler Verschiebung des der links gezeigten Kammereinheit 46 zugeordneten Trennkolbens 48 dafür zu sorgen, dass die Öffnung 100 nicht verschlossen wird, weist dieser Trennkolben 48 mehrere axial vorspringende Distanzstege 102 auf, welche am Bodenbereich der Kammereinheit 46 anstoßen und auf Grund der dazwischen gebildeten Öffnungen 104 auch bei maximaler Verschiebung des Trennkolbens 48 für ein Freihalten der Öffnung 100 sorgen.

Es ist selbstverständlich, dass auch bei der in Fig. 14 gezeigten Ausgestaltungsvariante das zusätzliche Volumen der Volumenbereiche 96 nicht nur durch jeweils eine der daneben liegenden Kammereinheiten 46, sondern, wie dies beispielsweise in Fig. 13 gezeigt ist, durch die beiden den Volumenbereich 96 jeweils begrenzenden Kammereinheiten 46 genutzt werden kann. Hier wäre bei der Darstellung der Fig. 14 lediglich auch im Bereich der rechts gezeigten Kammereinheit 46 eine Öffnung 100 vorzusehen. Auch ist es dann vorteilhaft, den dieser Kammereinheit 46 zugeordneten Trennkolben 48 so auszugestalten, wie bei der links liegenden Kammereinheit 46.

Es sei abschließend noch darauf hingewiesen, dass bei den vorangehenden Beispielen die Zuordnung der ersten Druckkammern zur Wirksamkeit in einem Schubzustand und der zweiten Druckkammern zur Wirksamkeit in einem Zugzustand beispielhaft ist. Dies könnte selbstverständlich auch umgekehrt sein. Auch könnte selbstverständlich die Anzahl der jeweiligen Druckkammern höher oder niedriger sein. Auch könnte vorgesehen sein, dass nur für eine Relativdrehrichtung jeweils eine bzw. mehrere Druckkammern vorgesehen sind, die dann zur Erfüllung einer Dämpfungsfunktion mit einer oder mehreren Kammereinheiten zusammenwirken. Dies könnten beispielsweise dann, wenn nur in Zugrichtung eine Dämpfungsfunktion vorgesehen sein soll, die Druckkammern 34" bzw. 34' sein. In den anderen Druckkammern, also in diesem Falle dann den Druckkammern 32' und 32", wäre dann kein inkompressibles Dämpferfluid vorhanden. Diese könnten mit Luft gefüllt sein und Ausgleichsöffnungen aufweisen, so dass hier im Wesentlichen einer Relativdrehung keine Kraft entgegengesetzt wird. Auch hier könnte selbstverständlich die Anordnung anders sein, so dass nur die Druckkammern 32' und 32" zur Dämpfung beitragen.

## Patentansprüche

1. Torsionsschwingungsdämpferanordnung, insbesondere für den Antriebsstrang eines Fahrzeugs, umfassend eine Primärseite (12; 12a) und eine über eine Dämpferfluidanordnung mit der Primärseite (12; 12a) zur Drehung um eine Drehachse (A) und zur Relativdrehung bezüglich einander gekoppelte Sekundärseite (24; 24a), **dadurch gekennzeichnet, dass** die Dämpferfluidanordnung ein ein Drehmoment zwischen der Primärseite (12; 12a) und der Sekundärseite (24; 24a) übertragendes erstes Dämpferfluid mit geringerer Kompressibilität in einer ersten Dämpferfluidkammeranordnung (36; 36a) umfasst sowie ein bei Druckerhöhung des ersten Dämpferfluids in der ersten Dämpferfluidkammeranordnung (36; 36a) belastetes zweites Dämpferfluid mit höherer Kompressibilität in einer zweiten Dämpferfluidkammeranordnung (76; 76a) umfasst, wobei die zweite Dämpferfluidkammeranordnung (76; 76a) eine Mehrzahl von Kammereinheiten (46; 46a) umfasst, die bezüglich der ersten Dämpferfluidkammeranordnung (36; 36a) radial außen oder/und radial innen und in Umfangsrichtung aufeinander folgend angeordnet sind, wobei in Zuordnung zu jeder Kammereinheit (46; 46a) ein das erste Dämpferfluid von dem zweiten Dämpferfluid trennendes und bei Druckveränderung in der Kammereinheit (46; 46a) im Wesentlichen radial verlagerbares Trennelement (48; 48a) vorgesehen ist.

2. Torsionsschwingungsdämpferanordnung nach Anspruch 1,
**dadurch gekennzeichnet,**
**dass** das Trennelement (48; 48a) ein Trennkolben ist.

3. Torsionsschwingungsdämpferanordnung nach Anspruch 1 oder 2,
**dadurch gekennzeichnet,**
**dass** die erste Dämpferfluidkammeranordnung (36; 36a) mit ringartiger Struktur ausgebildet ist und die Kammereinheiten (46; 46a) der zweiten Dämpferfluidkammeranordnung (76; 76a) bezüglich der ersten Dämpferfluidkammeranordnung (36; 36a) um die Drehachse (A) in sternartiger Konfiguration angeordnet sind.

4. Torsionsschwingungsdämpferanordnung nach einem der Ansprüche 1 bis 3, **dadurch gekennzeichnet,**
**dass** die Kammereinheiten (46) der zweiten Dämpferfluidkammeranordnung (76) bezüglich der ersten Dämpferfluidkammeranordnung (36) radial außen angeordnet sind.

5. Torsionsschwingungsdämpferanordnung nach einem der Ansprüche 1 bis 3, **dadurch gekennzeichnet,**
**dass** die Kammereinheiten (46a) der zweiten Dämpferfluidkammeranordnung (76a) bezüglich der ersten Dämpferfluidkammeranordnung (36a) radial innen angeordnet sind.

6. Torsionsschwingungsdämpferanordnung nach einem der Ansprüche 1 bis 5, **dadurch gekennzeichnet,**
**dass** die erste Dämpferfluidkammeranordnung (36; 36a) wenigstens eine bei Relativdrehung der Primärseite (12; 12a) bezüglich der Sekundärseite (24; 24a) in einer ersten Relativdrehrichtung in ihrem Volumen verminderbare erste Druckkammer (32', 32"; 32a', 32a") aufweist, welche über eine Verbindungskammer (60, 64; 60a, 64a) in Wirkverbindung mit wenigstens einer dieser zugeordneten Kammereinheit (46; 46a) der zweiten Dämpferfluidkammeranordnung (76; 76a) steht.

7. Torsionsschwingungsdämpferanordnung nach Anspruch 6,
**dadurch gekennzeichnet,**
**dass** die erste Dämpferfluidkammeranordnung (36; 36a) wenigstens eine bei Relativdrehung der Primärseite (12; 12a) bezüglich der Sekundärseite (24; 24a) in einer der ersten Relativdrehrichtung entgegengesetzten zweiten Relativdrehrichtung in ihrem Volumen verminderbare zweite Druckkammer (34', 34"; 34a', 34a") aufweist, welche über eine Verbindungskammer (62, 66; 62a, 66a) in Wirkverbindung mit wenigstens einer dieser zugeordneten Kammereinheit (46; 46a) der zweiten Dämpferfluidkammeranordnung (76; 76a) steht.

8. Torsionsschwingungsdämpferanordnung nach Anspruch 6 oder 7,
**dadurch gekennzeichnet,**
**dass** die wenigstens eine erste Druckkammer (32', 32"; 32a', 32a") oder/und die wenigstens eine zweite Druckkammer (34', 34"; 34a', 34a") sich in Umfangsrichtung erstreckt und dass die dieser zugeordnete Verbindungskammer (60, 62, 64, 66; 60a, 62a, 64a, 66a) an derjenigen radialen Seite angeordnet ist, an welcher die zweite Dämpferfluidkammeranordnung (76; 76a) bezüglich der ersten Dämpferfluidkammeranordnung (36; 36a) angeordnet ist.

9. Torsionsschwingungsdämpferanordnung nach einem der Ansprüche 6 bis 8, **dadurch gekennzeichnet,**
**dass** eine Seite von Primärseite (12; 12a) und Sekundärseite (24; 24a) ein erstes im Wesentlichen zylindrisches Kammergehäuse (20; 20a) umfasst und dass die andere Seite von Primärseite (12; 12a) und Sekundärseite (24; 24a) ein in das erste zylindrische Kammergehäuse (20; 20a) eingesetztes und mit diesem einen Ringraum (26; 26a) begrenzendes zweites zylindrisches Kammergehäuse (22; 22a) umfasst, wobei an dem ersten Kammergehäuse (20; 20a) wenigstens ein auf das zweite Kammergehäuse (22; 22a) sich zu erstreckender erster Umfangsbegrenzungsvorsprung (28', 28"; 28a', 28a") vorgesehen ist und an dem zweiten Kammergehäuse (22; 22a) wenigstens ein sich auf das erste Kammergehäuse (20; 20a) zu erstreckender zweiter Umfangsbegrenzungsvorsprung (30', 30"; 30a', 30a") vorgesehen ist und wobei zwischen jeweils einem ersten Umfangsbegrenzungsvorsprung (28', 28"; 28a, 28a") und einem zweiten Umfangsbegrenzungsvorsprung (30', 30"; 30a', 30a") eine Druckkammer (32', 32", 34', 34"; 32a', 32a", 34a', 34a") in Umfangsrichtung begrenzt ist und das Volumen der Druckkammer durch Relativumfangsbewegung der diese begrenzenden Umfangsbegrenzungsvorsprünge (28', 28", 30', 30";
28a', 28a", 30a', 30a") veränderbar ist.

10. Torsionsschwingungsdämpferanordnung nach Anspruch 7 oder einem der Ansprüche 8 und 9, sofern auf Anspruch 7 rückbezogen,
**dadurch gekennzeichnet,**
**dass** wenigstens eine einer ersten Druckkammer (32', 32") der ersten Dämpferfluidkammeranordnung (36) zugeordnete Kammereinheit (46) der zweiten Dämpferfluidkammeranordnung (76) in Druckausgleichsverbindung mit wenigstens einer weiteren Kammereinheit (46) der zweiten Dämpferfluidkammeranordnung (76) steht, welche einer zweiten Druckkammer (34', 34") der ersten Dämpferfluidkammeranordnung (36) zugeordnet ist.

11. Torsionsschwingungsdämpferanordnung nach Anspruch 7 oder einem der Ansprüche 8 bis 10, sofern auf Anspruch 7 rückbezogen,
**dadurch gekennzeichnet,**
**dass** die Anzahl der einer ersten Druckkammer (32', 32"; 32a', 32a") der ersten Dämpferfluidkammer (36; 36a) zugeordneten Kammereinheiten (46; 46a) der zweiten Dämpferfluidkammeranordnung (76; 76a) sich von der Anzahl der einer zweiten Druckkammer (34', 34"; 34a', 34a") der ersten Dämpferfluidkammeranordnung (36a; 36a') zugeordneten Kammereinheiten (46; 46a) der zweiten Dämpferfluidkammeranordnung (76; 76a) unterscheidet.

12. Torsionsschwingungsdämpferanordnung nach einem der Ansprüche 6 bis 11,
**dadurch gekennzeichnet,**
**dass** die Anzahl der einer ersten Druckkammer (32', 32"; 32a, 32a") der ersten Dämpferfluidkammeranordnung (36; 36a) zugeordneten Kammereinheiten (46; 46a) der zweiten Dämpferfluidkammeranordnung (76; 76a) sich von der Anzahl der einer weiteren ersten Druckkammer (32', 32"; 32a', 32a") der ersten Fluidkammeranordnung (36; 36a) zugeordneten
Kammereinheiten (46; 46a) der zweiten Dämpferfluidkammeranordnung (76; 76a) unterscheidet.

13. Torsionsschwingungsdämpferanordnung nach Anspruch 7 oder einem der Ansprüche 8 bis 12, sofern auf Anspruch 7 rückbezogen,
**dadurch gekennzeichnet,**
**dass** die Anzahl der einer zweiten Druckkammer (34', 34"; 34a', 34a") der ersten Dämpferfluidkammeranordnung (36; 36a) zugeordneten Kammereinheiten (46; 46a) der zweiten Dämpferfluidkammeranordnung (76; 76a) sich von der Anzahl der einer weiteren zweiten Druckkammer (34', 34"; 34a', 34a") der ersten Dämpferfluidkammeranordnung (36; 36a) zugeordneten Kammereinheiten (46; 46a) der zweiten Dämpferfluidkammeranordnung (76; 76a) unterscheidet.

14. Torsionsschwingungsdämpferanordnung nach einem der Ansprüche 1 bis 13,
**dadurch gekennzeichnet,**
**dass** wenigstens einer Kammereinheit (46)der zweiten Dämpferfluidkammeranordnung (76) eine Volumenerweiterung (96) für das zweite Dämpferfluid zugeordnet ist.

15. Torsionsschwingungsdämpferanordnung nach Anspruch 14,
**dadurch gekennzeichnet,**
**dass** die Volumenerweiterung (96) das zwischen zwei in Umfangsrichtung aufeinander folgenden Kammereinheiten (46) der zweiten Dämpferfluidkammeranordnung (76) eingeschlossene Volumen umfasst.

16. Torsionsschwingungsdämpferanordnung nach einem der Ansprüche 1 bis 15,
**dadurch gekennzeichnet,**
**dass** die erste Dämpferfluidkammeranordnung (36) über eine Drehdurchführung (80) in Verbindung mit einer Quelle oder/und einem Reservoir für das erste Dämpferfluid steht oder bringbar ist.

## Claims

1. Torsional vibration damper arrangement, in particular for the drive train of a vehicle, comprising a primary side (12; 12a) and a secondary side (24; 24a) coupled via a damper fluid arrangement to the primary side (12; 12a) for rotation about an axis of rotation (A) and for relative rotation with respect to one another, **characterized in that** the damper fluid arrangement comprises a first damper fluid transmitting a torque between the primary side (12; 12a) and the secondary side (24; 24a) and having lower compressibility, in a first damper fluid chamber arrangement (36; 36a), and comprises a second damper fluid loaded in the event of a rise in pressure of the first damper fluid in the first damper fluid chamber arrangement (36; 36a) and having higher compressibility, in a second damper fluid chamber arrangement (76; 76a), the second damper fluid chamber arrangement (76; 76a) comprising a plurality of chamber units (46; 46a) which, with respect to the first damper fluid chamber arrangement (36; 36a), are arranged radially on the outside and/or radially on the inside and successively in the circumferential direction, there being provided, in assignment to each chamber unit (46; 46a), a separating element (48; 48a) which separates the first damper fluid from the second damper fluid and which can be displaced essentially radially in the event of a variation in pressure in the chamber unit (46; 46a).

2. Torsional vibration damper arrangement according to Claim 1, **characterized in that** the separating element (48; 48a) is a separating piston.

3. Torsional vibration damper arrangement according to Claim 1 or 2, **characterized in that** the first damper fluid chamber arrangement (36; 36a) is designed with a ring-like structure, and the chamber units (46; 46a) of the second damper fluid chamber arrangement (76; 76a) are arranged in a star-like configuration about the axis of rotation (A) with respect to the first damper fluid chamber arrangement (36; 36a).

4. Torsional vibration damper arrangement according to one of Claims 1 to 3, **characterized in that** the chamber units (46) of the second damper fluid chamber arrangement (76) are arranged radially on the outside with respect to the first damper fluid chamber arrangement (36).

5. Torsional vibration damper arrangement according to one of Claims 1 to 3, **characterized in that** the chamber units (46a) of the second damper fluid chamber arrangement (76a) are arranged radially on the inside with respect to the first damper fluid chamber arrangement (36a).

6. Torsional vibration damper arrangement according to one of Claims 1 to 5, **characterized in that** the first damper fluid chamber arrangement (36; 36a) has at least one first pressure chamber (32', 32"; 32a', 32a") which can be reduced in its volume in the event of a relative rotation of the primary side (12; 12a) with respect to the secondary side (24; 24a) in a first relative direction of rotation and which is operatively connected via a connecting chamber (60, 64; 60a, 64a) to at least one chamber unit (46; 46a), assigned to this, of the second damper fluid chamber arrangement (76; 76a).

7. Torsional vibration damper arrangement according to Claim 6, **characterized in that** the first damper fluid chamber arrangement (36; 36a) has at least one second pressure chamber (34', 34", 34a', 34a") which can be reduced in its volume in the event of a relative rotation of the primary side (12; 12a) with respect to the secondary side (24; 24a) in a second relative direction of rotation opposite to the first relative direction of rotation and which is operatively connected via a connecting chamber (62, 66; 62a, 66a) to at least one chamber unit (46; 46a), assigned to this, of the second damper fluid chamber arrangement (76; 76a).

8. Torsional vibration damper arrangement according to Claim 6 or 7, **characterized in that** the at least one first pressure chamber (32', 32"; 32a', 32a") and/or the at least one second pressure chamber (34', 34"; 34a', 34a") extend/extends in the circumferential direction, and **in that** the connecting chamber (60, 62, 64, 66; 60a, 62a, 64a, 66a) assigned to this is arranged on that radial side on which the second damper fluid chamber arrangement (76; 76a) is arranged with respect to the first damper fluid chamber arrangement (36; 36a).

9. Torsional vibration damper arrangement according to one of Claims 6 to 8, **characterized in that** one side of the primary side (12; 12a) and secondary side (24; 24a) comprises a first essentially cylindrical chamber housing (20; 20a), and **in that** the other side of the primary side (12; 12a) and secondary side (24; 24a) comprises a second cylindrical chamber housing (22; 22a) inserted into the first cylindrical chamber housing (20; 20a) and delimiting with the latter an annular space (26; 26a), at least one first circumferential limiting projection (28', 28"; 28a', 28a") which extends onto the second chamber housing (22; 22a) being provided on the first chamber housing (20; 20a), and at least one second circumferential limiting projection (30', 30"; 30a', 30a") which extends onto the first chamber housing (20; 20a) being provided on the second chamber housing (22; 22a), and a pressure chamber (32', 32", 34', 34"; 32a', 32a", 34a', 34a") being delimited in the circumferential direction in each case between a first circumferential limiting projection (28', 28"; 28a, 28a") and a second circumferential limiting projection (30', 30"; 30a', 30a"), and the volume of the pressure chamber being variable as a result of a relative circumferential movement of the circumferential limiting projections (28', 28", 30', 30"; 28a', 28a", 30a', 30a") which delimit the said pressure chamber.

10. Torsional vibration damper arrangement according to Claim 7, or one of Claims 8 and 9 in so far as it refers back to Claim 7, **characterized in that** at least one chamber unit (46), assigned to a first pressure chamber (32', 32") of the first damper fluid chamber arrangement (36), of the second damper fluid chamber arrangement (76) is in pressure-compensating connection with at least one further chamber unit (46) of the second damper fluid chamber arrangement (76), which further chamber unit is assigned to a second pressure chamber (34', 34") of the first damper fluid chamber arrangement (36).

11. Torsional vibration damper arrangement according to Claim 7, or one of Claims 8 to 10 in so far as it refers back to Claim 7, **characterized in that** the number of chamber units (46; 46a), assigned to a first pressure chamber (32', 32"; 32a', 32a") of the first damper fluid chamber (36; 36a), of the second damper fluid chamber arrangement (76; 76a) differs from the number of chamber units (46; 46a), assigned to a second pressure chamber (34', 34"; 34a', 34a") of the first damper fluid chamber arrangement (36a; 36a'), of the second damper fluid chamber arrangement (76; 76a).

12. Torsional vibration damper arrangement according to one of Claims 6 to 11, **characterized in that** the number of chamber units (46; 46a), assigned to a first pressure chamber (32', 32"; 32a, 32a") of the first damper fluid chamber arrangement (36; 36a), of the second damper fluid chamber arrangement (76; 76a) differs from the number of chamber units (46; 46a), assigned to a further first pressure chamber (32', 32"; 32a', 32a") of the first fluid chamber arrangement (36; 36a), of the second damper fluid chamber arrangement (76; 76a).

13. Torsional vibration damper arrangement according to Claim 7, or one of Claims 8 to 12 in so far as it refers back to Claim 7, **characterized in that** the number of chamber units (46; 46a), assigned to a second pressure chamber (34', 34"; 34a', 34a") of the first damper fluid chamber arrangement (36; 36a), of the second damper fluid chamber arrangement (76; 76a) differs from the number of chamber units (46; 46a), assigned to a further second pressure chamber (34', 34"; 34a', 34a") of the first damper fluid chamber arrangement (36; 36a), of the second damper fluid chamber arrangement (76; 76a).

14. Torsional vibration damper arrangement according to one of Claims 1 to 13, **characterized in that** at least one chamber unit (46) of the second damper fluid chamber arrangement (76) is assigned a volume extension (96) for the second damper fluid.

15. Torsional vibration damper arrangement according to Claim 14, **characterized in that** the volume extension (96) comprises the volume enclosed between two circumferentially successive chamber units (46) of the second damper fluid chamber arrangement (76).

16. Torsional vibration damper arrangement according to one of Claims 1 to 15, **characterized in that** the first damper fluid chamber arrangement (36) is or can be connected via a rotary leadthrough (80) to a source and/or a reservoir for the first damper fluid.

## Revendications

1. Agencement d'amortisseur de vibrations de torsion, notamment pour la chaîne cinématique d'un véhicule, comprenant un côté primaire (12 ; 12a) et un côté secondaire (24 ; 24a) accouplé par le biais d'un agencement de fluide d'amortissement au côté primaire (12 ; 12a) pour la rotation autour d'un axe de rotation (A) et pour la rotation relative l'un par rapport à l'autre, **caractérisé en ce que** l'agencement de fluide d'amortissement comprend un premier fluide d'amortissement transmettant un couple entre le côté primaire (12 ; 12a) et le côté secondaire (24 ; 24a), avec une plus faible compressibilité, dans un premier agencement de chambre de fluide d'amortissement (36 ; 36a), ainsi qu'un deuxième fluide d'amortissement de plus grande compressibilité sollicité lors de l'augmentation de pression du premier fluide d'amortissement dans le premier agencement de chambre de fluide d'amortissement (36 ; 36a) dans un deuxième agencement de chambre de fluide d'amortissement (76 ; 76a), le deuxième agencement de chambre de fluide d'amortissement (76 ; 76a) comprenant une pluralité d'unités de chambre (46 ; 46a) qui sont disposées par rapport au premier agencement de chambre de fluide d'amortissement (36 ; 36a) radialement à l'extérieur et/ou radialement à l'intérieur et dans la direction périphérique l'un après l'autre, un élément de séparation (48 ; 48a) séparant le premier fluide d'amortissement du deuxième fluide d'amortissement et pouvant être déplacé essentiellement radialement lors d'une variation de pression dans l'unité de chambre (46 ; 46a) étant prévu en association avec chaque unité de chambre (46 ; 46a).

2. Agencement d'amortisseur de vibrations de torsion selon la revendication 1,
**caractérisé en ce que**
l'élément de séparation (48 ; 48a) est un piston de séparation.

3. Agencement d'amortisseur de vibrations de torsion selon la revendication 1 ou 2,
**caractérisé en ce que**
le premier agencement de chambre de fluide d'amortissement (36 ; 36a) est réalisé avec une structure en forme de bague et les unités de chambre (46 ; 46a) du deuxième agencement de chambre de fluide d'amortissement (76 ; 76a) sont disposées par rapport au premier agencement de chambre de fluide d'amortissement (36 ; 36a) autour de l'axe de rotation (A) dans une configuration stellaire.

4. Agencement d'amortisseur de vibrations de torsion selon l'une quelconque des revendications 1 à 3, **caractérisé en ce que**
les unités de chambre (46) du deuxième agencement de chambre de fluide d'amortissement (76) sont disposées radialement à l'extérieur par rapport au premier agencement de chambre de fluide d'amortissement (36).

5. Agencement d'amortisseur de vibrations de torsion selon l'une quelconque des revendications 1 à 3, **caractérisé en ce que**
les unités de chambre (46a) du deuxième agencement de chambre de fluide d'amortissement (76a) sont disposées radialement à l'intérieur par rapport au premier agencement de chambre de fluide d'amortissement (36a).

6. Agencement d'amortisseur de vibrations de torsion selon l'une quelconque des revendications 1 à 5, **caractérisé en ce que**
le premier agencement de chambre de fluide d'amortissement (36 ; 36a) présente au moins une première chambre de pression (32', 32", 32a', 32a") dont le volume peut être réduit lors d'une rotation relative du côté primaire (12 ; 12a) par rapport au côté secondaire (24 ; 24a) dans une première direction de rotation relative, laquelle est en liaison fonctionnelle avec au moins une unité de chambre (46 ; 4 6a) du deuxième agencement de chambre de fluide d'amortissement (76 ; 76a) associée à celle-ci, par le biais d'une chambre de connexion (60, 64 ; 60a, 64a).

7. Agencement d'amortisseur de vibrations de torsion selon la revendication 6,
**caractérisé en ce que**
le premier agencement de chambre de fluide d'amortissement (36 ; 36a) présente au moins une deuxième chambre de pression (34', 34" ; 34a', 34a") dont le volume peut être réduit lors d'une rotation relative du côté primaire (12 ; 12a) par rapport au côté secondaire (24 ; 24a) dans une deuxième direction de rotation relative opposée à la première direction de rotation relative, laquelle est en liaison fonctionnelle avec au moins une unité de chambre (46 ; 46a) du deuxième agencement de chambre de fluide d'amortissement (76 ; 76a) associée à celle-ci, par le biais d'une chambre de connexion (62, 66 ; 62a, 66a).

8. Agencement d'amortisseur de vibrations de torsion selon la revendication 6 ou 7,
**caractérisé en ce que**
l'au moins une première chambre de pression (32', 32", 32a', 32a") et/ou l'au moins une deuxième chambre de pression (34', 34" ; 34a', 34a") s'étend dans la direction périphérique et **en ce que** la chambre de connexion (60, 62, 64, 66 ; 60a, 62a, 64a, 66a) associée à celle-ci est disposée du côté radial sur lequel est disposé le deuxième agencement de chambre de fluide d'amortissement (76 ; 76a) par rapport au premier agencement de chambre de fluide d'amortissement (36 ; 36a).

9. Agencement d'amortisseur de vibrations de torsion selon l'une quelconque des revendications 6 à 8, **caractérisé en ce**
**qu'**un côté du côté primaire (12 ; 12a) et du côté secondaire (24 ; 24a) comprend un premier boîtier de chambre (20 ; 20a) essentiellement cylindrique et en ce que l'autre côté du côté primaire (12 ; 12a) et du côté secondaire (24 ; 24a) comprend un deuxième boîtier de chambre cylindrique (22 ; 22a) inséré dans le premier boîtier de chambre cylindrique (20 ; 20a) et limitant avec celui-ci un espace annulaire (26 ; 26a), au moins une première saillie de limitation périphérique (28', 28" ; 28a', 28a") s'étendant vers le deuxième boîtier de chambre (22 ; 22a) étant prévue sur le premier boîtier de chambre (20 ; 20a), et au moins une deuxième saillie de limitation périphérique (30', 30" ; 30a', 30a") s'étendant vers le premier boîtier de chambre (20 ; 20a) étant prévue su le deuxième boîtier de chambre (22 ; 22a), et une chambre de pression (32', 32", 34', 34" ; 32a', 32a", 34a', 34a") étant limitée dans la direction périphérique entre à chaque fois une première saillie de limitation périphérique (28', 28" ;
28a', 28a") et une deuxième saillie de limitation périphérique (30', 30" ; 30a', 30a") et le volume de la chambre de pression pouvant être modifié par déplacement périphérique relatif des saillies de limitation périphériques (28', 28", 30', 30" ; 28a', 28a", 30a', 30a") limitant celle-ci.

10. Agencement d'amortisseur de vibrations de torsion selon la revendication 7 ou l'une quelconque des revendications 8 et 9, dans la mesure où elles se rapportent à la revendication 7,
**caractérisé en ce**
**qu'**au moins une unité de chambre (46) du deuxième agencement de chambre de fluide d'amortissement (76) associée à une première chambre de pression (32', 32") du premier agencement de chambre de fluide d'amortissement (36) est en liaison d'équilibrage de pression avec au moins une autre unité de chambre (46) du deuxième agencement de chambre de fluide d'amortissement (76), qui est associée à une deuxième chambre de pression (34', 34") du premier agencement de chambre de fluide d'amortissement (36).

11. Agencement d'amortisseur de vibrations de torsion selon la revendication 7 ou l'une quelconque des revendications 8 à 10, dans la mesure où elles se rapportent à la revendication 7,
**caractérisé en ce que**
le nombre des unités de chambre (46 ; 46a) du deuxième agencement de chambre de fluide d'amortissement (76 ; 76a) associées à une première chambre de pression (32', 32" ; 32a', 32a") de la première chambre de fluide d'amortissement (36 ; 36a) se distingue du nombre des unités de chambre (46 ; 46a) du deuxième agencement de chambre de fluide d'amortissement (76 ; 76a) associées à une deuxième chambre de pression (34', 34" ; 34a', 34a") du premier agencement de chambre de fluide d'amortissement (36a ; 36a').

12. Agencement d'amortisseur de vibrations de torsion selon l'une quelconque des revendications 6 à 11, **caractérisé en ce que**
le nombre des unités de chambre (46 ; 46a) du deuxième agencement de chambre de fluide d'amortissement (76 ; 76a) associées à une première chambre de pression (32', 32" ; 32a, 32a") du premier agencement de chambre de fluide d'amortissement (36 ; 36a) se distingue du nombre des unités de chambre (46 ; 46a) du deuxième agencement de chambre de fluide d'amortissement (76 ; 76a) associées à une autre première chambre de pression (32', 32" ; 32a', 32a") du premier agencement de chambre de fluide (36 ; 36a).

13. Agencement d'amortisseur de vibrations de torsion selon la revendication 7 ou selon l'une quelconque des revendications 8 à 12 dans la mesure où elles se rapportent à la revendication 7,
**caractérisé en ce que**
le nombre des unités de chambre (46 ; 46a) du deuxième agencement de chambre de fluide d'amortissement (76 ; 76a) associées à une deuxième chambre de pression (34', 34" ; 34a', 34a") du premier agencement de chambre de fluide d'amortissement (36a ; 36a) se distingue du nombre des unités de chambre (46 ; 46a) du deuxième agencement de chambre de fluide d'amortissement (76 ; 76a) associées à une autre deuxième chambre de pression (34', 34" ; 34a', 34a") du premier agencement de chambre de fluide d'amortissement (36a ; 36a).

14. Agencement d'amortisseur de vibrations de torsion selon l'une quelconque des revendications 1 à 13, **caractérisé en ce**
**qu'**une augmentation de volume (96) pour le deuxième fluide d'amortissement est associée à au moins une unité de chambre (46) du deuxième agencement de chambre de fluide d'amortissement (76).

15. Agencement d'amortisseur de vibrations de torsion selon la revendication 14,
**caractérisé en ce que**
l'augmentation de volume (96) comprend le volume inclus entre deux unités de chambre successives (46) dans la direction périphérique du deuxième agencement de chambre de fluide d'amortissement (76) .

16. Agencement d'amortisseur de vibrations de torsion selon l'une quelconque des revendications 1 à 15, **caractérisé en ce que**
le premier agencement de chambre de fluide d'amortissement (36) est ou peut être amené par le biais d'un passage rotatif (80) en liaison avec une source et/ou un réservoir pour le premier fluide d'amortissement.
